# EUROPEAN PATENT APPLICATION

(11) **EP 3 486 751 A1**
(43) Date of publication of application: **22.05.2019**
(21) Application number: 17827338.9
(22) Date of filing: 19.06.2017
(51) Int. Cl.: G06F 3/01, G06F 3/0481, G09G 5/00, G09G 5/36, G09G 5/377, H04N 5/64, G09G 3/00, G06F 3/147, G09G 5/14, G09G 5/02

(54) **IMAGE DISPLAY SYSTEM, HEAD-MOUNTED DISPLAY CONTROL DEVICE, AND OPERATING METHOD AND OPERATING PROGRAM FOR SAME**

(30) Priority: 12.07.2016 JP 2016137814
(71) Applicant: FUJIFILM Corporation, Tokyo 106-8620 (JP)
(72) Inventor: IKUTA, Mayuko, Tokyo 107-0052 (JP); OKABE, Yuki, Tokyo 107-0052 (JP); KITAGAWA, Yusuke, Tokyo 107-0052 (JP)
(74) Representative: Klunker IP Patentanwälte PartG mbB
(86) International application number: PCT/JP2017/022489
(87) International publication number: WO 2018/012207

(57) **Abstract**

There are provided an image display system, and a control apparatus for a head-mounted display and an operation method and an operation program therefor with which user's convenience can be improved.

A first detection unit (80) detects a first gesture in which a hand (37) of a user (14) is moved in a depth direction of a 3D image (40), and outputs back-of-hand position information indicating the position of a back (90) of the hand (37) in the depth direction to a determination unit (83). The determination unit (83) determines, on the basis of the back-of-hand position information, a layer, among a plurality of layers of the 3D image (40), that is located at a position that matches the position of the back (90) in the depth direction to be a selection layer. A second detection unit (81) detects a second gesture using a finger (38) for changing the transmittance of the selection layer. An accepting unit (84) accepts instruction information for changing the transmittance of the selection layer and outputs the instruction information to a display control unit (74). The display control unit (74) changes, in accordance with the instruction information, the transmittance of the layer that is determined by the determination unit (83) to be the selection layer.

## Description

### BACKGROUND OF THE INVENTION

### 1. Field of the Invention

The present invention relates to an image display system, and a control apparatus for a head-mounted display and an operation method and an operation program therefor.

### 2. Description of the Related Art

A technique is known that allows a user to have an alternative experience close to reality in a virtual space created by using a computer. For example, JP2003-099808A describes a technique relating to a virtual surgical operation in which an external-view image that represents a part of a human body, such as the head, is displayed to a user, and the user cuts out an affected part with a virtual surgical knife that operates together with an input device operated by the user.

In JP2003-099808A, the external-view image is, for example a three-dimensional volume rendering image, and the input device is, for example, a handheld input device, such as a glove-type device or an input device generating opposing force. In JP2003-099808A, the magnitude and orientation of a force virtually applied to the external-view image via the input device and a position on the external-view image at which the force is applied are detected to calculate the depth of the surgical cut virtually made with the surgical knife. Then, a layer (such as the scalp, the skull, the brain tissue, blood vessels, or the nervous system) that corresponds to the calculated depth is determined.

### SUMMARY OF THE INVENTION

As the technique that allows a user to have an alternative experience in a virtual space, a technique is available that allows a user to recognize an augmented reality space obtained by merging the real space with a virtual space through a head-mounted display (hereinafter referred to as "HMD") that is worn on the head of the user. As such a technique using an HMD, a technique is available in which operations are performed by making gestures with the hand, fingers, and so on of the user instead of an input device to make the operations more intuitive.

There may be a case where a three-dimensional virtual object in which a plurality of layers are stacked in the depth direction, such as the three-dimensional volume rendering image of a human body described in JP2003-099808A, is displayed on an HMD, and the user makes gestures to select a desired layer from among the plurality of layers and subsequently give some instructions for the selected layer (hereinafter referred to as "selection layer").

A case is assumed where, for example, the selection layer is selected by making a gesture in which the user moves their fingertip in the depth direction. In this case, it is assumed that a layer that is located at a position that matches the position of the user's fingertip in the depth direction is the selection layer and that an instruction given for the selection layer is a gesture in which the user rotates their finger or taps their finger. Accordingly, the selection layer can be selected and an instruction can be given for the selection layer by using only the finger.

However, the position of the fingertip in the depth direction may change when the gesture in which the user rotates their finger or taps their finger is made, and the instruction given for the selection layer may be erroneously recognized as selection of the selection layer. Therefore, with this method, it is not possible to smoothly select the selection layer or give an instruction for the selection layer without erroneous recognition, and it is not possible to improve user's convenience.

In JP2003-099808A, the depth of the surgical cut virtually made with the surgical knife is calculated, and a layer that corresponds to the calculated depth is determined. Therefore, it is true that the selection layer is selected; however, an instruction that is given for the selection layer is not described. Originally, the technique described in JP2003-099808A is not a technique using an HMD or a technique that involves operations performed by making gestures.

An object of the present invention is to provide an image display system, and a control apparatus for a head-mounted display and an operation method and an operation program therefor with which user's convenience can be improved.

To address the issues described above, an image display system according to the present invention is an image display system including: a head-mounted display that is worn on a head of a user; and a control apparatus for the head-mounted display to allow the user to recognize, through the head-mounted display, an augmented reality space obtained by merging a real space with a virtual space. The image display system includes: a display control unit that causes a three-dimensional virtual object in which a plurality of layers are stacked in a depth direction to be displayed on the head-mounted display; a first detection unit that detects a first gesture in which a hand of the user is moved in the depth direction; a second detection unit that detects a second gesture using a finger of the hand; a determination unit that performs, on the basis of the first gesture, determination of a selection layer that is selected by the user from among the plurality of layers, the determination being performed with reference to a position of a back of the hand; and an accepting unit that accepts an instruction for the selection layer, the instruction corresponding to the second gesture.

It is preferable that the determination unit determine a layer, among the plurality of layers, that is located at a position that matches the position of the back of the hand in the depth direction to be the selection layer. It is preferable that the determination unit determine a layer, among the plurality of layers, that is located at a position that matches a position of a tip of the finger in the depth direction to be the selection layer, the position of the tip of the finger being estimated from the back of the hand.

It is preferable that the display control unit make a display mode of a layer among the plurality of layers differ in a case where the layer is the selection layer and in a case where the layer is not the selection layer. It is preferable that the display control unit cause an annotation indicating a name of the selection layer to be displayed. Further, it is preferable that the display control unit change a color of a layer among the plurality of layers in accordance with a distance between the layer and the hand in the depth direction.

It is preferable that the second gesture be a gesture in which the finger is rotated or the finger is tapped.

It is preferable that the accepting unit accept, as the instruction, an instruction for changing a transmittance of the selection layer.

It is preferable that a display position of the virtual object in the real space be fixed. It is preferable that the virtual object be a three-dimensional volume rendering image of a human body.

A control apparatus for a head-mounted display according to the present invention is a control apparatus for a head-mounted display that is worn on a head of a user to allow the user to recognize an augmented reality space obtained by merging a real space with a virtual space, including: a display control unit that causes a three-dimensional virtual object in which a plurality of layers are stacked in a depth direction to be displayed on the head-mounted display; a first detection unit that detects a first gesture in which a hand of the user is moved in the depth direction; a second detection unit that detects a second gesture using a finger of the hand; a determination unit that performs, on the basis of the first gesture, determination of a selection layer that is selected by the user from among the plurality of layers, the determination being performed with reference to a position of a back of the hand; and an accepting unit that accepts an instruction for the selection layer, the instruction corresponding to the second gesture.

An operation method for a control apparatus for a head-mounted display according to the present invention is an operation method for a control apparatus for a head-mounted display that is worn on a head of a user to allow the user to recognize an augmented reality space obtained by merging a real space with a virtual space, including: a display control step of causing a three-dimensional virtual object in which a plurality of layers are stacked in a depth direction to be displayed on the head-mounted display; a first detection step of detecting a first gesture in which a hand of the user is moved in the depth direction; a second detection step of detecting a second gesture using a finger of the hand; a determination step of performing, on the basis of the first gesture, determination of a selection layer that is selected by the user from among the plurality of layers, the determination being performed with reference to a position of a back of the hand; and an accepting step of accepting an instruction for the selection layer, the instruction corresponding to the second gesture.

An operation program for a control apparatus for a head-mounted display according to the present invention is an operation program for a control apparatus for a head-mounted display that is worn on a head of a user to allow the user to recognize an augmented reality space obtained by merging a real space with a virtual space, the operation program causing a computer to execute a function including: a display control function of causing a three-dimensional virtual object in which a plurality of layers are stacked in a depth direction to be displayed on the head-mounted display; a first detection function of detecting a first gesture in which a hand of the user is moved in the depth direction; a second detection function of detecting a second gesture using a finger of the hand; a determination function of performing, on the basis of the first gesture, determination of a selection layer that is selected by the user from among the plurality of layers, the determination being performed with reference to a position of a back of the hand; and an accepting function of accepting an instruction for the selection layer, the instruction corresponding to the second gesture.

According to the present invention, a selection layer that is selected by a user from among a plurality of layers in a three-dimensional virtual object is determined on the basis of a first gesture in which the hand of the user is moved in the depth direction and with reference to the position of the back of the hand, and an instruction for the selection layer that corresponds to a second gesture using the finger of the user is accepted. Therefore, it is possible to smoothly select the selection layer and give an instruction for the selection layer without erroneous recognition. Accordingly, it is possible to provide an image display system, and a control apparatus for a head-mounted display and an operation method and an operation program therefor with which user's convenience can be improved.

### BRIEF DESCRIPTION OF THE DRAWINGS

Fig. 1 is a diagram illustrating an image display system and an image accumulation server;
Fig. 2 is a perspective external view of a head-mounted display;
Fig. 3 is a diagram illustrating a state of a conference using the image display system;
Fig. 4 is a diagram for describing the way in which an augmented reality space is organized;
Fig. 5 is a diagram illustrating a CT scan image that constitutes a 3D image;
Fig. 6 is a block diagram illustrating a computer that constitutes a control apparatus;
Fig. 7 is a block diagram illustrating functional units of a CPU of the control apparatus;
Fig. 8 is a block diagram illustrating the details of a detection unit and a processing unit;
Fig. 9 is a diagram illustrating a function of a first detection unit that detects a first gesture and outputs back-of-hand position information;
Fig. 10 is a diagram illustrating a function of a determination unit that determines a selection layer with reference to the position of a back;
Fig. 11 is a diagram illustrating a positional relationship between the back and skin in a depth direction in a case where the skin is determined to be the selection layer;
Fig. 12 is a diagram illustrating second correspondence information and a second gesture;
Fig. 13 is a diagram illustrating a function of a second detection unit that converts the rotation direction and rotation amount of a finger to instruction information;
Fig. 14 is a diagram illustrating a function of a display control unit that changes the transmittance of the selection layer;
Fig. 15 is a diagram illustrating a function of the display control unit that makes a display mode of a layer differ in a case where the layer is the selection layer and in a case where the layer is not the selection layer;
Fig. 16 is a diagram illustrating a function of the display control unit that causes an annotation indicating the name of the selection layer to be displayed;
Fig. 17 is a flowchart illustrating an overall processing procedure of a conference held by using the image display system;
Fig. 18 is a flowchart illustrating a processing procedure in a mode for changing the transmittance of the selection layer;
Fig. 19 is a diagram illustrating a second embodiment in which a layer that is located at a position that matches, in the depth direction, the position of a fingertip estimated from the back is determined to be the selection layer;
Fig. 20 is a diagram illustrating a positional relationship between the fingertip and the skin in the depth direction in a case where the skin is determined to be the selection layer;
Fig. 21 is a diagram illustrating a third embodiment in which the color of a layer is changed in accordance with the distance between the layer and a hand in the depth direction;
Fig. 22 is a diagram illustrating a fourth embodiment in which a gesture in which the finger is tapped is the second gesture;
Fig. 23 is a diagram illustrating a state where an annotation for indicating a note is displayed in response to an instruction for adding the note to the selection layer;
Fig. 24 is a diagram illustrating another example of the control apparatus; and
Fig. 25 is a diagram illustrating yet another example of the control apparatus.

### DESCRIPTION OF THE PREFERRED EMBODIMENTS

### First Embodiment

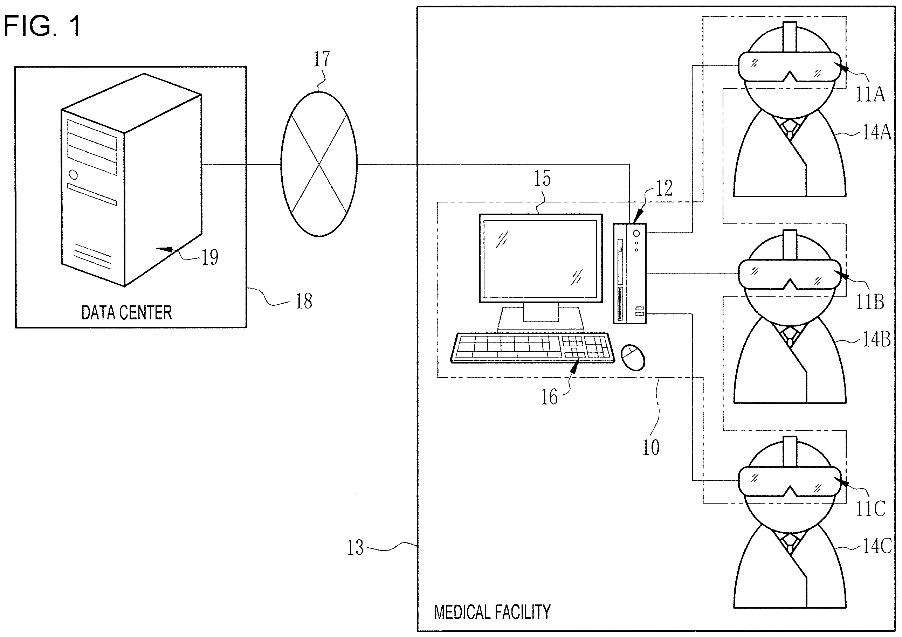

In Fig. 1, an image display system 10 includes HMDs 11A, 11B, and 11C and a control apparatus 12 and is placed in a medical facility 13. The HMD 11A is worn on the head of a user 14A, the HMD 11B is worn on the head of a user 14B, and the HMD 11C is worn on the head of a user 14C. The users 14A to 14C are medical staff members including doctors and nurses who belong to the medical facility 13. Note that the head is a part of the human body that is located above the neck of the human body in a standing position state, and is a part that includes the face and so on. Hereinafter, the HMDs 11A to 11C may be collectively referred to as HMDs 11 and the users 14A to 14C may be collectively referred to as users 14 in a case where these need not be specifically distinguished from each other.

The control apparatus 12 is, for example, a desktop personal computer and has a display 15 and an input device 16 constituted by a keyboard and a mouse. The display 15 displays a screen that is used in operations performed via the input device 16. The screen used in operations constitutes a GUI (graphical user interface). The control apparatus 12 accepts an operation instruction input from the input device 16 through the screen of the display 15.

The control apparatus 12 is connected to an image accumulation server 19 in a data center 18 via a network 17 so as to allow communication with each other. The network 17 is, for example, a WAN (wide area network), such as the Internet or a public communication network. On the network 17, a VPN (virtual private network) is formed or a communication protocol having a high security level, such as HTTPS (Hypertext Transfer Protocol Secure), is used by taking into consideration information security.

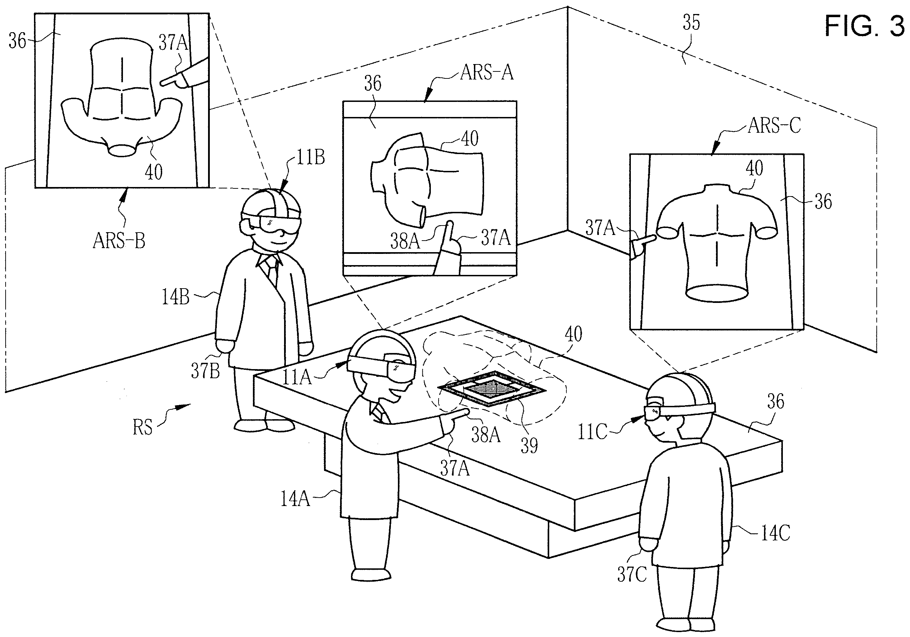

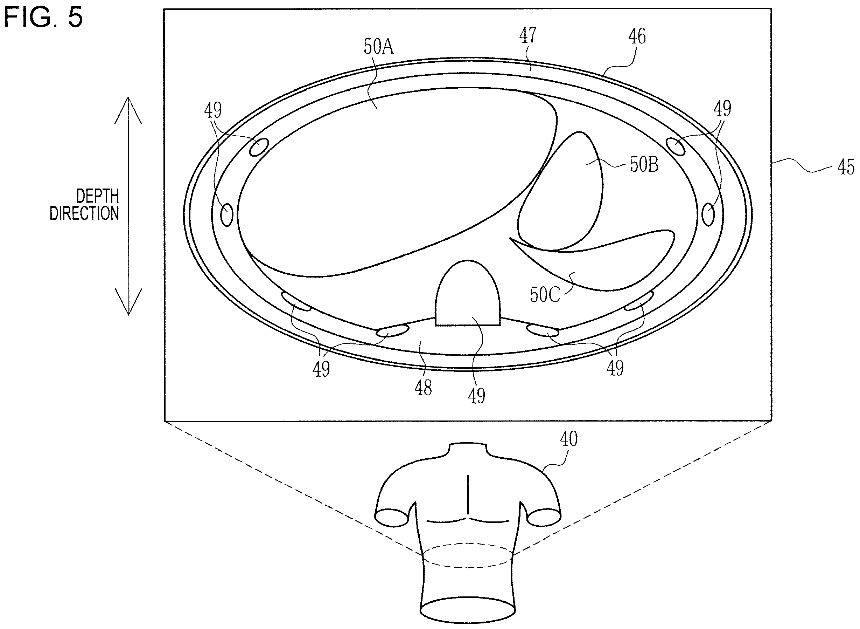

The image accumulation server 19 accumulates various medical images of patients obtained in the medical facility 13 and distributes the medical images to the medical facility 13. The medical images include, for example, a three-dimensional volume rendering image (hereinafter referred to as "3D image") 40 (see Fig. 3) obtained by re-forming CT (computed tomography) scan images 45 (see Fig. 5) through image processing. A medical image can be retrieved by using a patient ID (identification data), which is an ID for identifying each patient, an image ID, which is an ID for identifying each medical image, the type of modality used to capture the medical image, or the image capture date and time as a search key.

The image accumulation server 19 searches for a medical image that corresponds to a search key in response to a distribution request including the search key from the medical facility 13, and distributes the retrieved medical image to the medical facility 13. Note that, in Fig. 1, only one medical facility 13 is connected to the image accumulation server 19; however, the image accumulation server 19 is actually connected to a plurality of medical facilities 13, and collects and manages medical images from the plurality of medical facilities 13.

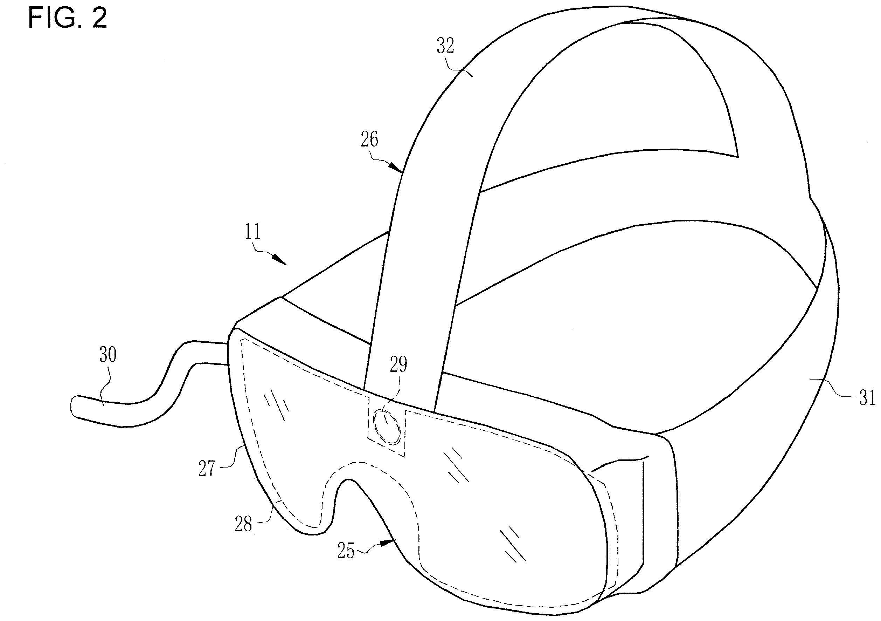

In Fig. 2, the HMD 11 is constituted by a main body part 25 and a band part 26. The main body part 25 is located in front of the eyes of the user 14 when the user 14 is wearing the HMD 11. The band part 26 is fixed to the upper half of the head of the user 14 when the user 14 is wearing the HMD 11.

The main body part 25 includes a protective frame 27, a screen 28, and a camera 29. The protective frame 27 has a goggle form to entirely cover the both eyes of the user 14 and is formed of transparent colored glass or plastic. Although not illustrated, polyurethane foam is attached to a part of the protective frame 27 that is in contact with the face of the user 14.

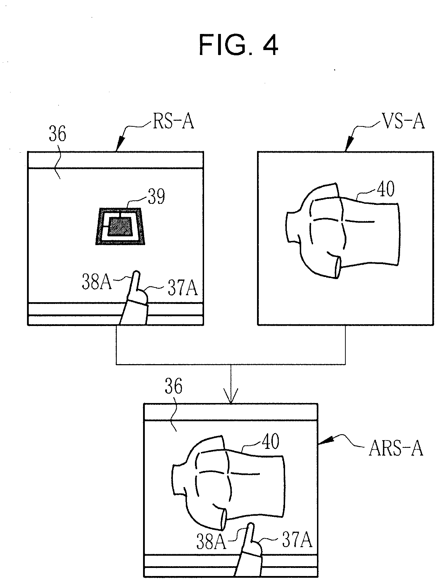

The screen 28 and the camera 29 are disposed on the inner side of the protective frame 27. The screen 28 has an eyeglasses form and is formed of a transparent material similarly to the protective frame 27. The user 14 visually recognizes a real space RS (see Fig. 4) with the naked eyes through the screen 28 and the protective frame 27. That is, the HMD 11 is of a transparent type.

On the inside surface of the screen 28 that faces the eyes of the user 14, a virtual image formed by using computer graphics is projected and displayed by a projection part (not illustrated). As is well known, the projection part is constituted by a display element, such as a liquid crystal, for displaying a virtual image and a projection optical system that projects the virtual image displayed on the display element onto the inside surface of the screen 28. The virtual image is reflected by the inside surface of the screen 28 and is visible to the user 14. Accordingly, the user 14 recognizes the virtual image as a virtual image in a virtual space VS (see Fig. 4).

The virtual image includes a virtual object that is recognized by the user 14 in an augmented reality space ARS (see Fig. 3) similarly to an actual object that is present in the real space RS. The virtual object is, for example, the 3D image 40 of the upper half of a patient. The 3D image 40 is colored such that, for example, the skin is colored in a skin color, the bone is colored gray, and the internal organs are colored reddish brown. The user 14 makes gestures for the 3D image 40 using their hand 37 (see Fig. 3) and their finger 38 (the index finger, see Fig. 3).

The camera 29 is provided, for example, at the center of the upper part of the main body part 25 that faces the glabella of the user 14 when the user 14 is wearing the HMD 11. The camera 29 captures, at a predetermined frame rate (for example, 30 frames/second), an image of the field of view that is substantially the same as the augmented reality space ARS recognized by the user 14 through the HMD 11. The camera 29 successively transmits captured images to the control apparatus 12. The user 14 makes a gesture for the 3D image 40 with the hand 37 and the finger 38 of the user 14 within the field of view of the camera 29. Note that the example case of the HMD 11 of a transparent type has been described here; however, a non-transparent-type HMD that superimposes a virtual image on a captured image of the real space RS output from the camera 29 and that projects and displays the resulting image on the inside surface of the screen 28 may be used.

To the main body part 25, one end of a cable 30 is connected. The other end of the cable 30 is connected to the control apparatus 12. The HMD 11 communicates with the control apparatus 12 via the cable 30. Note that communication between the HMD 11 and the control apparatus 12 need not be wired communication using the cable 30 and may be wireless communication.

The band part 26 is a belt-like strip having a width of approximately several centimeters and is constituted by a horizontal band 31 and a vertical band 32. The horizontal band 31 is wound so as to extend along the temples and the back of the head of the user 14. The vertical band 32 is wound so as to extend along the forehead, the parietal region of the head, and the back of the head of the user 14. To the horizontal band 31 and the vertical band 32, buckles not illustrated are attached so that the lengths are adjustable.

Fig. 3 illustrates a state where the users 14A to 14C gather together in an operating room 35 of the medical facility 13 to hold a conference for discussing a surgical operation plan for a patient for which a surgical operation is scheduled (hereinafter referred to as "target patient"). The users 14A to 14C respectively recognize augmented reality spaces ARS-A, ARS-B, and ARS-C through the HMDs 11A to 11C. Note that, in Fig. 3, the control apparatus 12 and the cable 30 are omitted.

In the operating room 35, an operation table 36 is placed. The user 14A stands near the center of one of the long sides of the operation table 36, the user 14B stands by one of the short sides of the operation table 36, and the user 14C stands by the other short side of the operation table 36 (on the side opposite the user 14B). The user 14A explains the condition and so on of the target patient to the users 14B and 14C while pointing a hand 37A and a finger 38A at the operation table 36. Note that, hereinafter, the hands 37A, 37B, and 37C of the respective users 14A to 14C may be collectively referred to as hands 37 similarly to the HMDs 11 and the users 14. The finger 38A of the user 14A may be simply referred to as the finger 38.

On the operation table 36, a marker 39 is laid. The marker 39 is, for example, a sheet having a square frame on which a regular pattern in white and black and identification lines for identifying the top, the bottom, the left, and the right are drawn. The marker 39 indicates a position in the real space RS at which a virtual object appears. That is, the display position of a virtual object is fixed to the marker 39 that is present in the real space RS.

Fig. 3 illustrates a state where the 3D image 40 of the upper half of the target patient lying on their back is displayed on the marker 39 as a virtual object. The 3D image 40 is arranged such that the body axis extends along the long sides of the operation table 36, the neck is located on the side of the user 14B, and the lumbar part is located on the side of the user 14C. In the augmented reality spaces ARS-A to ARS-C, the marker 39 is hidden behind the 3D image 40 and is not displayed.

The users 14A to 14C perform various processes for the 3D image 40, such as performing an abdominal operation using a virtual surgical knife and making an affected part for which a surgical operation is scheduled be directly visually recognizable through the layers of skin, subcutaneous tissue, and bones as described below. The processes for the 3D image 40 are performed by, for example, one representative user 14 (here, the user 14A) who is authorized to perform the processes because the plurality of users 14 simultaneously performing the processes may lead to confusion. Note that, in the real space RS, the 3D image 40 is not present on the operation table 36 and only the marker 39 is laid, and therefore, the 3D image 40 is represented by a dashed line and the marker 39 is represented by a solid line on the operation table 36.

The display position of the 3D image 40 in the real space RS is fixed to the marker 39, and the users 14A to 14C stand at different positions. Therefore, the 3D image 40 looks different in the augmented reality spaces ARS-A to ARS-C respectively recognized by the users 14A to 14C. Specifically, the user 14A sees the 3D image 40 in which the right side of the body is located on the near side and the neck is located on the left side. The user 14B sees the 3D image 40 in which the neck is located on the near side and the lumbar part is located on the far side. To the contrary, the user 14C sees the 3D image 40 in which the lumbar part is located on the near side and the neck is located on the far side.

For example, when the user 14 comes closer to the marker 39, the 3D image 40 is enlarged and displayed as the user 14 comes closer. To the contrary, when the user 14 moves away from the marker 39, the 3D image 40 is reduced and displayed as the user 14 moves away. Accordingly, the display of the 3D image 40 changes in accordance with the three-dimensional positional relationship between the HMD 11 (user 14) and the marker 39.

As a matter of course, the operation table 36, the hand 37A of the user 14A, and so on, which are actual objects in the real space RS, look different in the augmented reality spaces ARS-A to ARS-C respectively recognized by the users 14A to 14C. For example, the user 14A sees the hand 37A of the user 14A on the near side, the user 14B sees the hand 37A of the user 14A on the right side, and to the contrary, the user 14C sees the hand 37A of the user 14A on the left side.

Fig. 4 illustrates the way in which, for example, the augmented reality space ARS-A recognized by the user 14A is organized. The user 14A visually recognizes, through the screen 28 and the protective frame 27 of the HMD 11, the real space RS-A in which the operation table 36, the hand 37A of the user 14A, and the marker 39 are present. In addition, the user 14A visually recognizes, on the inside surface of the screen 28, the virtual space VS-A in which the 3D image 40 is present. Accordingly, the user 14A recognizes the augmented reality space ARS-A obtained by merging the real space RS-A with the virtual space VS-A.

Fig. 5 illustrates one of the plurality of CT scan images 45 that constitute the 3D image 40. Here, the anterior-posterior direction of the human body along a line that connects the abdomen with the back and that is parallel to the surface of the CT scan image 45 (slice surface) is assumed to be a depth direction. In the CT scan image 45, a plurality of layers of the human anatomy including skin 46, subcutaneous tissue 47, such as fat, muscular tissue 48, such as the rectus abdominis muscle, bones 49, such as the ribs and the sternums, and internal organs 50, such as a liver 50A, a stomach 50B, and a spleen 50C, are present sequentially from the outer side. The 3D image 40 is an image obtained by re-forming the CT scan images 45 in which such a plurality of layers of the human anatomy are present, and therefore, is a virtual object in which the plurality of layers are stacked in the depth direction.

Among the plurality of layers, the skin 46, the subcutaneous tissue 47, the muscular tissue 48, and the bones 49 are present in this order from the outer side regardless of the position in the 3D image 40. On the other hand, the internal organs 50, such as the liver 50A, change in the 3D image 40 depending on the position in the body axis direction. Here, for example, the liver 50A, the stomach 50B, and the spleen 50C are illustrated. However, the image is the 3D image 40 of the upper half, and therefore, other internal organs 50, such as the kidneys, the pancreas, the small intestine, and the large intestine, are also included in the 3D image 40.

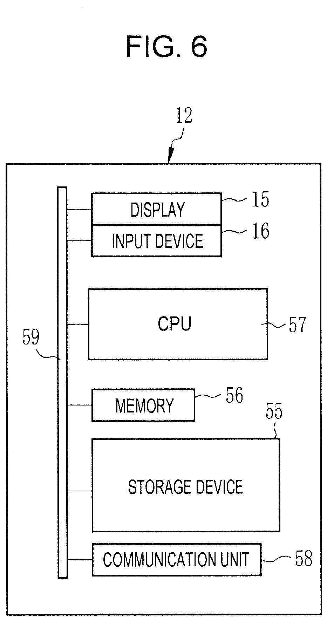

In Fig. 6, the control apparatus 12 includes a storage device 55, a memory 56, a CPU (central processing unit) 57, and a communication unit 58 in addition to the display 15 and the input device 16 described above. These are connected to one another via a data bus 59.

The storage device 55 is a hard disk drive or a disk array constituted by a plurality of hard disk drives, which is built in the control apparatus 12 or is connected to the control apparatus 12 via a cable or a network. In the storage device 55, a control program, such as an operating system, various application programs, various types of data associated with these programs, and so on are stored.

The memory 56 is a work memory used by the CPU 57 to perform processing. The CPU 57 loads a program stored in the storage device 55 to the memory 56 and performs processing in accordance with the program to thereby centrally control each unit of the control apparatus 12. The communication unit 58 is responsible for various types of data communication between the HMD 11 and the image accumulation server 19.

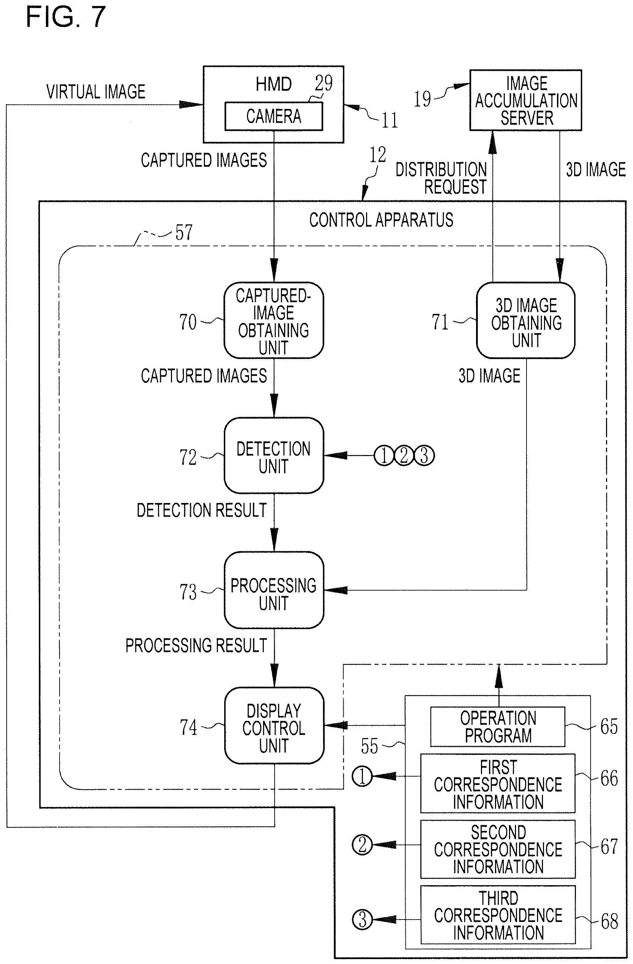

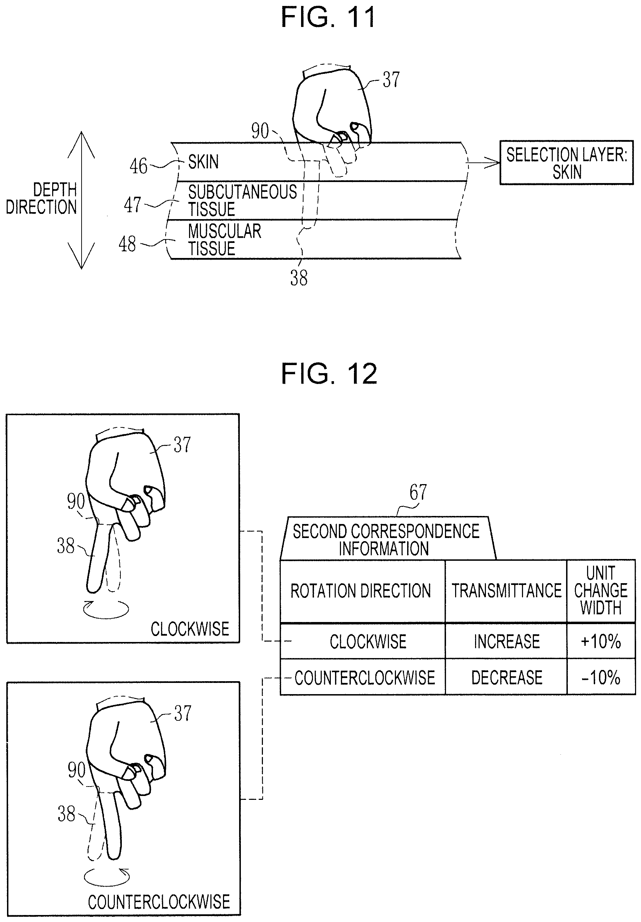

In Fig. 7, in the storage device 55, an operation program 65 is stored. The operation program 65 is an application program for causing the computer that constitutes the control apparatus 12 to function as a control apparatus for the HMD 11. In the storage device 55, first correspondence information 66, second correspondence information 67 (see Fig. 12), and third correspondence information 68 are stored in addition to the operation program 65.

When the operation program 65 is activated, the CPU 57 works together with the memory 56 and so on to function as a captured-image obtaining unit 70, a 3D image obtaining unit 71, a detection unit 72, a processing unit 73, and a display control unit 74.

The captured-image obtaining unit 70 obtains captured images successively transmitted from the camera 29 of the HMD 11 at a predetermined frame rate. The captured-image obtaining unit 70 outputs the obtained captured images to the detection unit 72.

The 3D image obtaining unit 71 transmits a distribution request for the 3D image 40 of the target patient to the image accumulation server 19. The 3D image obtaining unit 71 obtains the 3D image 40 of the target patient transmitted from the image accumulation server 19 in response to the distribution request. The 3D image obtaining unit 71 outputs the obtained 3D image 40 to the processing unit 73. Note that a search key for the 3D image 40 included in the distribution request is input via the input device 16.

The detection unit 72 performs various types of detection based on the captured images from the captured-image obtaining unit 70 by referring to the first correspondence information 66 to the third correspondence information 68. The detection unit 72 outputs a detection result to the processing unit 73. The processing unit 73 performs various types of processing based on the detection result from the detection unit 72. The processing unit 73 outputs a processing result to the display control unit 74.

The display control unit 74 is responsible for a display control function of controlling display of a virtual image, namely, the 3D image 40, which is a virtual object, on the HMD 11.

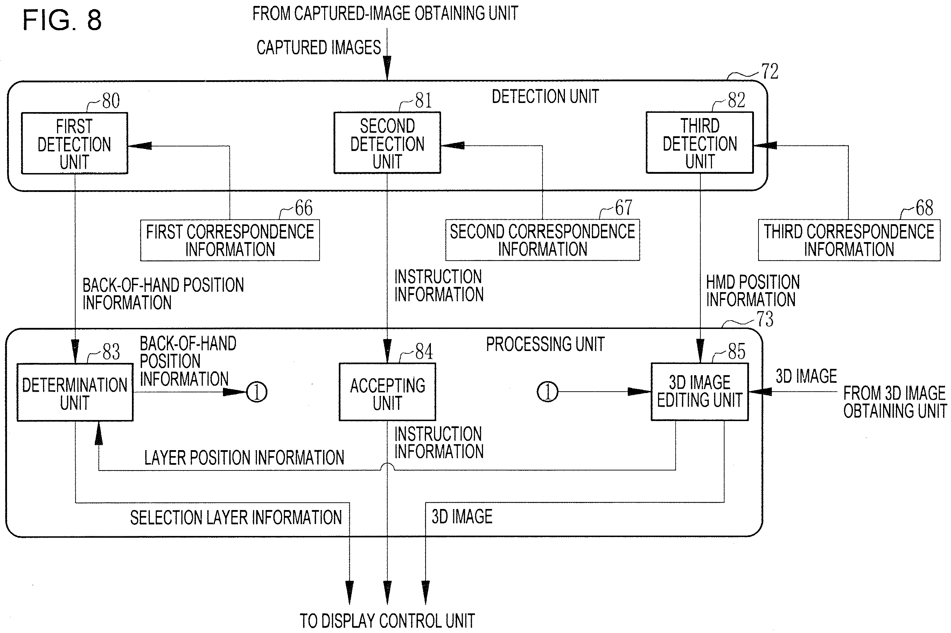

In Fig. 8, the detection unit 72 has a first detection unit 80, a second detection unit 81, and a third detection unit 82. The processing unit 73 has a determination unit 83, an accepting unit 84, and a 3D image editing unit 85.

The first detection unit 80 is responsible for a first detection function of detecting a first gesture. The first gesture is a gesture for the user 14 to select a desired layer from among the plurality of layers in the 3D image 40. Hereinafter, a layer selected by the user 14 is called a selection layer.

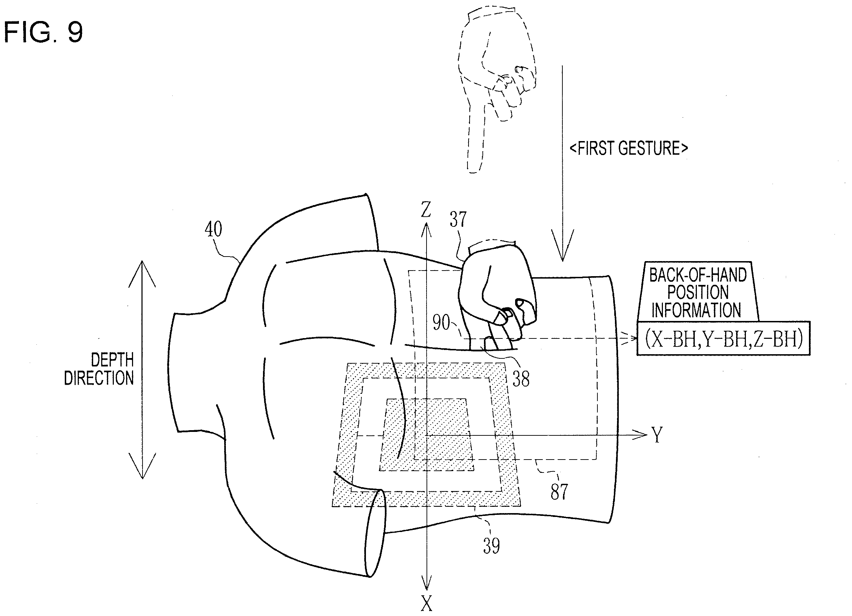

The first detection unit 80 detects the three-dimensional position of a back 90 (see Fig. 9) of the hand 37 relative to the marker 39 by referring to the first correspondence information 66. The first detection unit 80 outputs information about the detected position of the back 90 (hereinafter referred to as "back-of-hand position information", see Fig. 9) to the determination unit 83 as a detection result.

The second detection unit 81 is responsible for a second detection function of detecting a second gesture. The second gesture is a gesture for giving an instruction for changing, for example, the transmittance of the selection layer. Note that the transmittance is represented as a percentage. A case of a transmittance of 0% corresponds to a state where the selection layer is fully visually recognizable. A case of a transmittance of 100% corresponds to a state where the selection layer is fully transparent and a layer under the selection layer is visually recognizable.

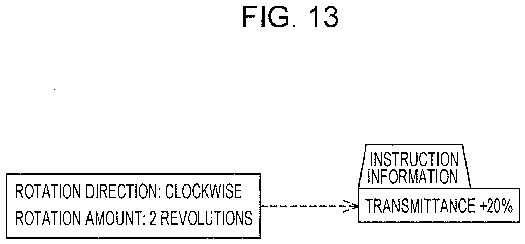

The second detection unit 81 converts the detected second gesture to information (hereinafter referred to as "instruction information", see Fig. 13) indicating an instruction for changing the transmittance of the selection layer, by referring to the second correspondence information 67. The second detection unit 81 outputs the instruction information obtained as a result of conversion to the accepting unit 84 as a detection result.

The third detection unit 82 detects the three-dimensional position of the HMD 11 (the eye of the user 14) relative to the marker 39. The third detection unit 82 outputs information about the detected position of the HMD 11 (hereinafter referred to as "HMD position information") to the 3D image editing unit 85 as a detection result.

In addition to the first detection unit 80 that detects the first gesture and the second detection unit 81 that detects the second gesture, the detection unit 72 also has a detection unit that detects, for example, a gesture, other than the first gesture and the second gesture, made in a mode for an abdominal operation using a virtual surgical knife.

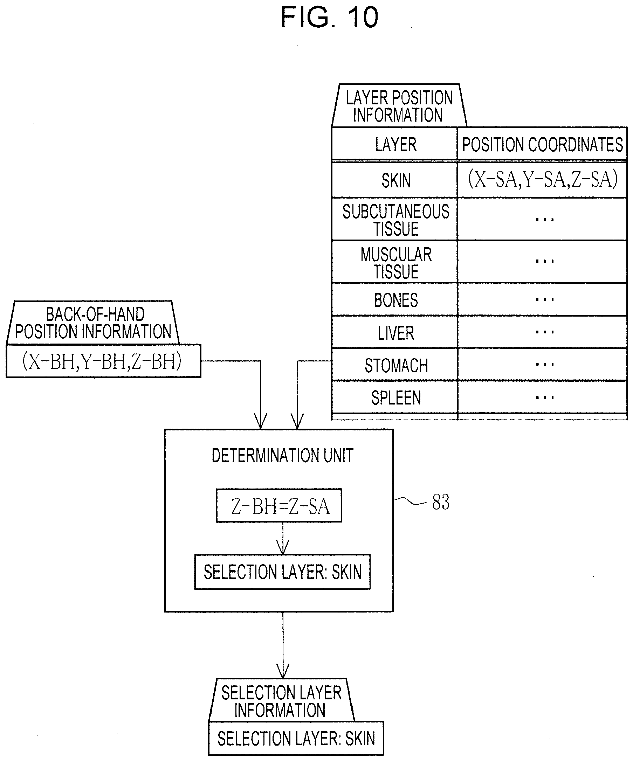

The determination unit 83 is responsible for a determination function of determining the selection layer among the plurality of layers in the 3D image 40 on the basis of the first gesture. The determination unit 83 outputs the back-of-hand position information from the first detection unit 80 to the 3D image editing unit 85. The determination unit 83 performs determination with reference to the position of the back 90 on the basis of the back-of-hand position information and information about the positions of the plurality of layers in the 3D image 40 (hereinafter referred to as "layer position information", see Fig. 10) transmitted from the 3D image editing unit 85 in accordance with the back-of-hand position information. The determination unit 83 outputs information about the determined selection layer (hereinafter referred to as "selection layer information", see Fig. 10) to the display control unit 74 as a processing result.

The accepting unit 84 is responsible for an accepting function of accepting an instruction corresponding to the second gesture that is made for the selection layer. Specifically, the accepting unit 84 accepts the instruction information from the second detection unit 81. The accepting unit 84 outputs the accepted instruction information to the display control unit 74 as a processing result.

The 3D image editing unit 85 edits the 3D image 40 from the 3D image obtaining unit 71 in accordance with the HMD position information from the third detection unit 82. More specifically, the 3D image editing unit 85 performs a rotation process and an enlarging/reducing process for the 3D image 40 so that the 3D image 40 is in an orientation and size when viewed from the position of the HMD 11 indicated by the HMD position information. The position information is output for each of the users 14A to 14C. The 3D image editing unit 85 edits the 3D image 40 so as to correspond to each of the users 14A to 14C on the basis of the position information of each of the users 14A to 14C. The 3D image editing unit 85 outputs the edited 3D image 40 to the display control unit 74 as a processing result. The 3D image editing unit 85 outputs, to the determination unit 83, the layer position information based on the back-of-hand position information from the determination unit 83.

Note that, similarly to the detection unit 72, the processing unit 73 also has a processing unit that performs a process corresponding to a gesture other than the first gesture and the second gesture, namely, for example, a process for, for example, switching between the mode for an abdominal operation and a mode for changing the transmittance of the selection layer.

In Fig. 9, the first gesture is a gesture in which the hand 37 is moved in the depth direction. More specifically, the first gesture is a gesture in which the hand 37 in a state where the finger 38 points a desired position (in Fig. 9, a position near the navel) on the 3D image 40 is brought downward from above the desired position in the depth direction.

The first detection unit 80 detects the back 90 of the hand 37 and the marker 39 in a captured image by using a well-known image recognition technique. Then, the first detection unit 80 detects the position coordinates (X-BH, Y-BH, Z-BH) of the back 90 in a three-dimensional space in which the origin corresponds to the center of the marker 39 as the back-of-hand position information. Note that the three-dimensional space in which the origin corresponds to the center of the marker 39 is a three-dimensional space in which the origin corresponds to the center of the marker 39, the XY plane corresponds to a flat surface on which the marker 39 is placed (in this case, the upper surface of the operation table 36), and the Z axis corresponds to an axis orthogonal to the flat surface on which the marker 39 is placed.

As illustrated by the illustration of the hand 37, in a case where the user 14 naturally extends their arm toward the 3D image 40, the palm of the hand faces the camera 29. Therefore, the back 90 is actually not present in a captured image, as represented by a dashed line. Accordingly, the first detection unit 80 recognizes the base part of the finger 38 in the palm of the hand present in the captured image as the back 90.

Here, the first correspondence information 66 referred to by the first detection unit 80 in a case of detecting the back-of-hand position information is a mathematical expression that is used to calculate the position coordinates of the back 90 in the three-dimensional space in which the origin corresponds to the center of the marker 39. In this mathematical expression, for example, the length and angle of each side of the square that forms the marker 39 in the captured image, the positions of the identification lines for identifying the top, the bottom, the left, and the right, the size of the hand 37 and the length of the finger 38, and so on are variables. Note that Fig. 9 illustrates the augmented reality space ARS, and therefore, a part of the finger 38 that is embedded in the 3D image 40 is not illustrated, and the marker 39 is represented by a dashed line. However, the entire finger 38 and the marker 39 are present in the captured image.

The dashed line indicated by a reference numeral 87 on the 3D image 40 represents an area that is set in advance with reference to the position of the back 90 indicated by the back-of-hand position information and that is a target area in which the transmittance of the selection layer is changed. Hereinafter, this area is referred to as a target area 87. The target area 87 has a size so as to cover most of the abdomen and is set in the form of a quadrangular prism in the depth direction.

In Fig. 10, the layer position information output from the 3D image editing unit 85 to the determination unit 83 includes the position coordinates of each layer in the three-dimensional space in which the origin corresponds to the center of the marker 39, as in the back-of-hand position information. For example, the position coordinates of the skin 46 are represented by (X-SA, Y-SA, Z-SA). The position coordinates of each layer are represented by a set of the position coordinates of the layer in the target area 87. For example, the position coordinates of the skin 46 (X-SA, Y-SA, Z-SA) are represented by a set of a plurality of position coordinates (X-S1, Y-S1, Z-S1), (X-S2, Y-S2, Z-S2), (X-S3, Y-S3, Z-S3), ... of the skin 46 in the target area 87.

Each layer has a thickness in the depth direction, and therefore, the Z coordinate of each layer includes at least the Z coordinate of the layer on the upper surface side and the Z coordinate of the layer on the lower surface side. That is, the Z coordinate of each layer represents the range of the layer in the depth direction.

The determination unit 83 determines a layer that is located at a position that matches the position of the back 90 in the depth direction to be the selection layer. Fig. 10 illustrates a case where the skin 46 is determined to be the selection layer because the Z coordinate (Z-BH) in the back-of-hand position information from the first detection unit 80 matches the Z coordinate (Z-SA) of the skin 46 in the layer position information from the 3D image editing unit 85 (Z-BH is within the range of the skin 46 indicated by Z-SA). Note that, in a case of the internal organs 50, such as the liver 50A, determination is performed not only on the basis of the Z coordinate but also on the basis of whether the XY coordinates in the back-of-hand position information match the XY coordinates in the layer position information.

Fig. 11 schematically illustrates a positional relationship between the back 90 and the skin 46 in the case illustrated in Fig. 10 where the skin is determined to be the selection layer. As illustrated, the position of the skin 46 matches the position of the back 90 in the depth direction, and therefore, the determination unit 83 determines the skin 46 to be the selection layer.

In Fig. 12, the second correspondence information 67 indicates correspondences between the rotation direction of the finger 38 and the change direction and unit change width of the transmittance. Here, a gesture in which the finger 38 is rotated clockwise about the back 90, which serves as a supporting point, is made to correspond to a gesture for increasing the transmittance, and a gesture in which the finger 38 is rotated counterclockwise about the back 90, which serves as a supporting point, is made to correspond to a gesture for decreasing the transmittance. The unit change width is a change width of the transmittance relative to the unit rotation amount of the finger 38 (for example, one revolution of the finger 38). In a case of clockwise rotation, +10% is made to correspond. In a case of counterclockwise rotation, - 10% is made to correspond.

The two illustrations on the left side illustrate the locus of the finger 38 present in a captured image in a case of rotation in the respective rotation directions. The upper illustration illustrates the case where the finger 38 is rotated clockwise, and the lower illustration illustrates the case where the finger 38 is rotated counterclockwise. In both cases, the back 90 serves as the supporting point in rotation, and therefore, the position of the back 90 remains unchanged even if the finger 38 is rotated.

The second detection unit 81 recognizes the finger 38 in captured images by using a well-known image recognition technique similarly to the first detection unit 80, compares the positions of the recognized finger 38 for every predetermined number of frames, and detects the rotation direction and rotation amount of the finger 38. Then, the second detection unit 81 converts the detected rotation direction and rotation amount of the finger 38 to instruction information by referring to the second correspondence information 67. For example, as illustrated in Fig. 13, in a case of detecting the finger 38 rotating clockwise two revolutions, conversion to instruction information for increasing the transmittance by 20% is performed. Note that, in the initial stage, the transmittances of all layers are set to 0%.

The third detection unit 82 recognizes the marker 39 in a captured image by using a well-known image recognition technique similarly to the first detection unit 80 and the second detection unit 81. Then, the third detection unit 82 detects the length and angle of each side of the square that forms the marker 39 and the positions of the identification lines for identifying the top, the bottom, the left, and the right, and detects HMD position information on the basis of these pieces of detected information and the third correspondence information 68.

The HMD position information includes the position coordinates of the HMD 11 in the three-dimensional space in which the origin corresponds to the center of the marker 39, as in the back-of-hand position information and the layer position information. The third correspondence information 68 is a mathematical expression that is used to calculate the position coordinates of the HMD 11 in the three-dimensional space in which the origin corresponds to the center of the marker 39. In this mathematical expression, for example, the length and angle of each side of the square that forms the marker 39 and the positions of the identification lines for identifying the top, the bottom, the left, and the right are variables.

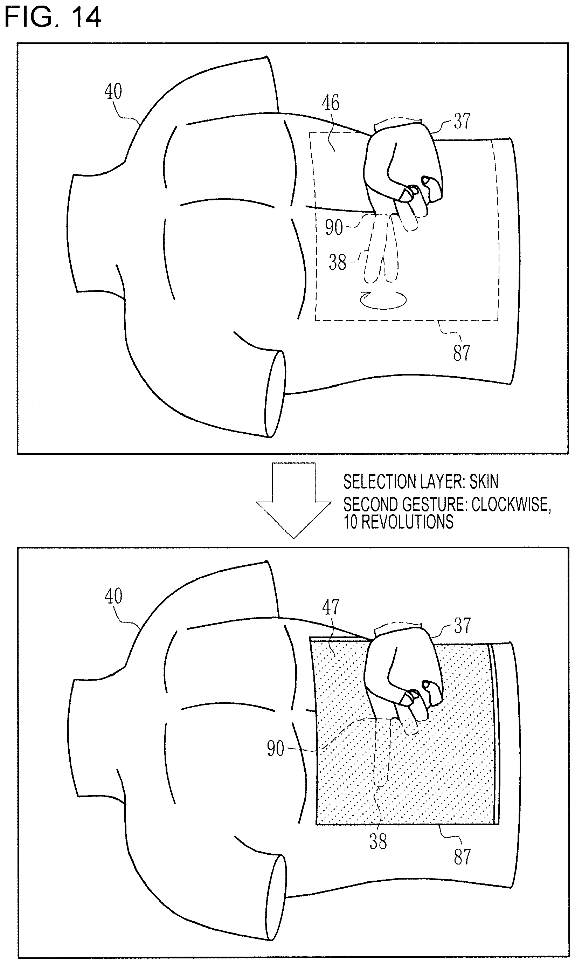

The display control unit 74 changes the transmittance of the selection layer of the 3D image 40 from the 3D image editing unit 85 in accordance with the selection layer information from the determination unit 83 and the instruction information from the accepting unit 84. For example, as illustrated in Fig. 14, in a case where the selection layer is the skin 46, the rotation direction of the finger 38 in the second gesture is the clockwise direction, and the rotation amount is ten revolutions, the display control unit 74 changes the transmittance of the skin 46 in the target area 87 to 100% to disclose the layer of the subcutaneous tissue 47, which is a layer under the skin 46, in the target area 87, as illustrated below the arrow. Note that Fig. 14 illustrates the example case of changing the transmittance of the skin 46; however, the transmittance is changed similarly for the other layers.

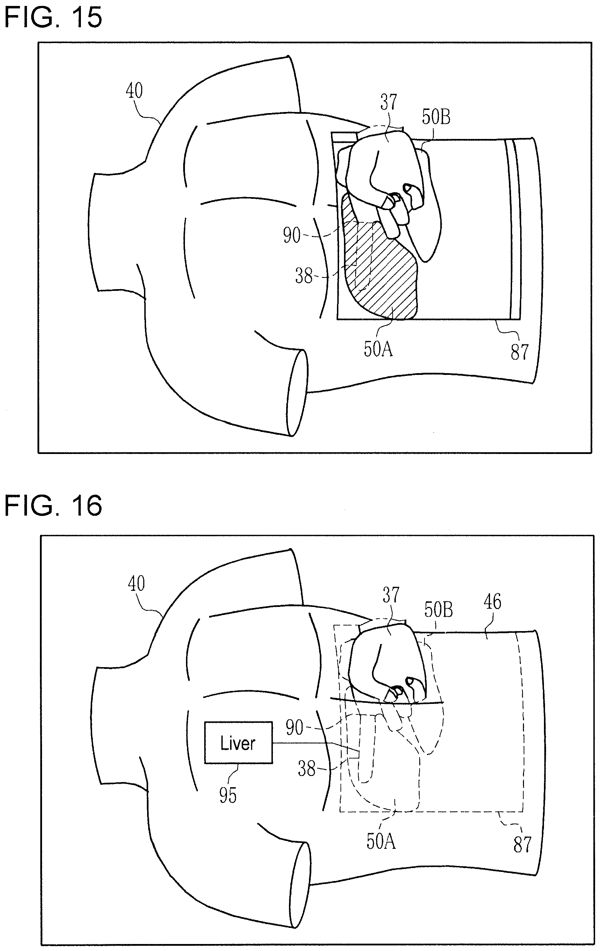

The display control unit 74 makes the display mode of a layer differ in a case where the layer is the selection layer and in a case where the layer is not the selection layer in accordance with the selection layer information from the determination unit 83. For example, as illustrated in Fig. 15, in a case where the liver 50A is determined to be the selection layer in a state where the transmittance of each of the layers of the skin 46, the subcutaneous tissue 47, the muscular tissue 48 and the bones 49 is changed to 100% and the plurality of internal organs 50 including the liver 50A, the stomach 50B, and so on are visually recognizable, the display control unit 74 colors the liver 50A differently from a case where the liver 50A is not the selection layer, as represented by hatching. For example, the display control unit 74 changes the color of the liver 50A to yellow from reddish brown, which is the color used in the case where the liver 50A is not the selection layer. Note that, instead of or in addition to the method of making the color differ, the brightness of the selection layer or the depth of the color of the selection layer may be made to differ from a case where the layer is not the selection layer, or the selection layer may be blinked.

Further, in a case where the selection layer is hidden behind another layer and is not visually recognizable to the user 14, the display control unit 74 causes an annotation 95 indicating the name of the selection layer to be displayed, as illustrated in Fig. 16. Fig. 16 illustrates a case where the liver 50A is determined to be the selection layer in a state where the transmittance of the skin 46 is 0% and the internal organs 50 are hidden behind the skin 46 and are not visually recognizable. In this case, the text "liver" is indicated as the annotation 95. Note that Fig. 15 and Fig. 16 illustrate only two organs, namely, the liver 50A and the stomach 50B, as the internal organs 50 to avoid complication; however, the other internal organs 50 are also displayed actually.

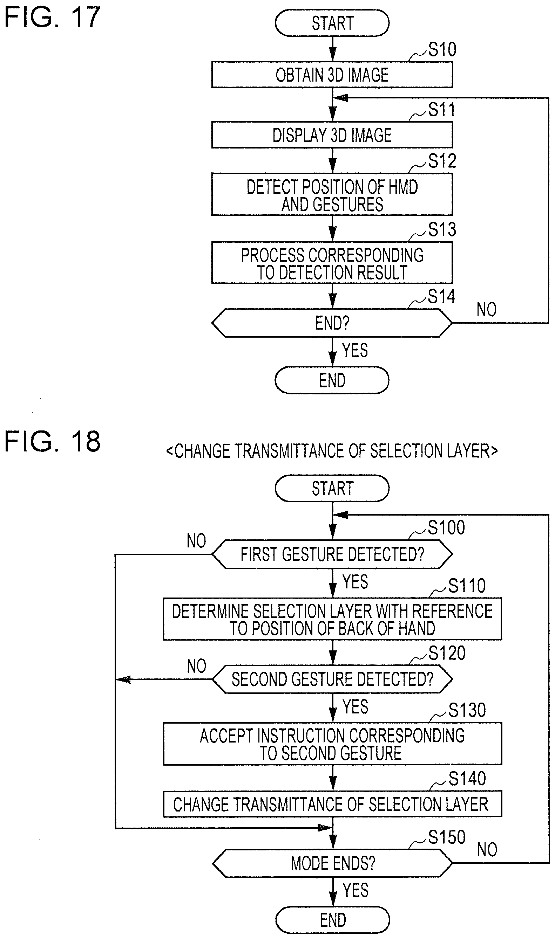

Hereinafter, operations performed in accordance with the above-described configuration are described with reference to the flowcharts in Fig. 17 and Fig. 18. First, the users 14A to 14C gather together in the operating room 35 to hold a conference and respectively put the HMDs 11A to 11C on their head. Then, one of the users 14A to 14C lays the marker 39 on the operation table 36 at a desired position. Next, the user 14 operates the input device 16 of the control apparatus 12 to transmit, to the image accumulation server 19, a distribution request for the 3D image 40 of the target patient. Accordingly, the 3D image 40 of the target patient is distributed to the control apparatus 12 from the image accumulation server 19.

As illustrated in Fig. 17, in the control apparatus 12, the 3D image 40 of the target patient is obtained by the 3D image obtaining unit 71 (step S10). The 3D image 40 is displayed on the HMD 11 via the display control unit 74 (step S11, display control step).

For example, the users 14 come close to the 3D image 40 to grasp the details of an affected part or move away from the 3D image 40 to grasp the overall picture, or the users 14 change the orientation of their face or their standing position to observe the affected part at different angles. One of the users 14 performs various processes on the 3D image 40 by making gestures.

In the control apparatus 12, the position of the HMD 11 and gestures are detected by the detection unit 72 on the basis of captured images from the camera 29 obtained by the captured-image obtaining unit 70 (step S12). Then, a process corresponding to the detection result is performed by the processing unit 73 (step S13). For example, the three-dimensional position of the HMD 11 relative to the marker 39 is detected by the third detection unit 82, and the 3D image 40 is edited by the 3D image editing unit 85 in accordance with the detection result, which is the HMD position information.

These processes from steps S11 to S13 are repeatedly performed until an instruction for ending the conference is input via the input device 16 (YES in step S14).

The flowchart in Fig. 18 illustrates a processing procedure that is performed in the mode for changing the transmittance of the selection layer. First, if the first gesture is detected by the first detection unit 80 (YES in step S100, first detection step), back-of-hand position information indicating the three-dimensional position of the back 90 of the hand 37 relative to the marker 39 is output to the determination unit 83 from the first detection unit 80, as illustrated in Fig. 9.

The determination unit 83 determines the selection layer on the basis of the back-of-hand position information from the first detection unit 80 and the layer position information from the 3D image editing unit 85, as illustrated in Fig. 10 (step S110, determination step). Selection layer information is output to the display control unit 74.

Subsequently, if the second gesture is detected by the second detection unit 81 (YES in step S120, second detection step), the second gesture is converted to instruction information by referring to the second correspondence information 67, as illustrated in Fig. 12 and Fig. 13. The instruction information is output to the accepting unit 84.

The accepting unit 84 accepts the instruction information from the second detection unit 81 (step S130, accepting step). The instruction information is output to the display control unit 74.

The display control unit 74 changes the transmittance of the selection layer of the 3D image 40, as illustrated in Fig. 14, in accordance with the selection layer information from the determination unit 83 and the instruction information from the accepting unit 84 (step S140). As illustrated in Fig. 15, the selection layer is displayed in a display mode different from that in a case where the present selection layer is not selected as the selection layer. Further, as illustrated in Fig. 16, the annotation 95 indicating the name of the selection layer is displayed.

This series of processes is repeatedly performed until an instruction from the user 14 for ending the mode for changing the transmittance of the selection layer is given (YES in step S150). Note that the instruction for ending the mode for changing the transmittance of the selection layer is given by making a gesture different from the first gesture and the second gesture, the gesture being such that, for example, crossing the hands.

The selection layer is determined with reference to the position of the back 90 that remains unchanged even if the second gesture in which the finger 38 is rotated is made for giving an instruction for the selection layer. Therefore, there is no possibility that the instruction given for the selection layer is erroneously recognized as selection of the selection layer. The gesture for selecting the selection layer is the first gesture in which the hand 37 is moved in the depth direction, and the gesture for giving an instruction for the selection layer is the second gesture in which the finger 38 is rotated. Therefore, the selection layer can be selected and an instruction for the selection layer can be given in a quick and simple manner by using only one hand, namely, the hand 37. Accordingly, the user 14's convenience can be improved.

The display mode of a layer is made differ in the case where the layer is the selection layer and in the case where the layer is not the selection layer, and therefore, the user 14 can know the layer that they select at a glance. The annotation 95 indicating the name of the selection layer is displayed. Therefore, even in a case where the selection layer is not visually recognizable to the user 14, it is possible to let the user 14 know which layer is the selection layer.

The display position of the 3D image 40 in the real space is fixed, and therefore, the users 14 can recognize the 3D image 40 as if the 3D image 40 is an actual object. Accordingly, the users 14 can hold a conference as if the target patient actually lies on the operation table 36.

In the first embodiment described above, the annotation 95 is displayed in a case where the selection layer is hidden behind another layer and is not visually recognizable to the users 14; however, the annotation 95 may be displayed regardless of whether the selection layer is visually recognizable to the users 14. For example, in a case where the skin 46 is determined to be the selection layer in the initial stage in which the transmittances of all layers are set to 0%, the annotation 95 with the text "skin" may be displayed. Display of the selection layer in which the display mode is made differ and display of the annotation 95 indicating the name of the selection layer may be simultaneously performed.

### Second Embodiment

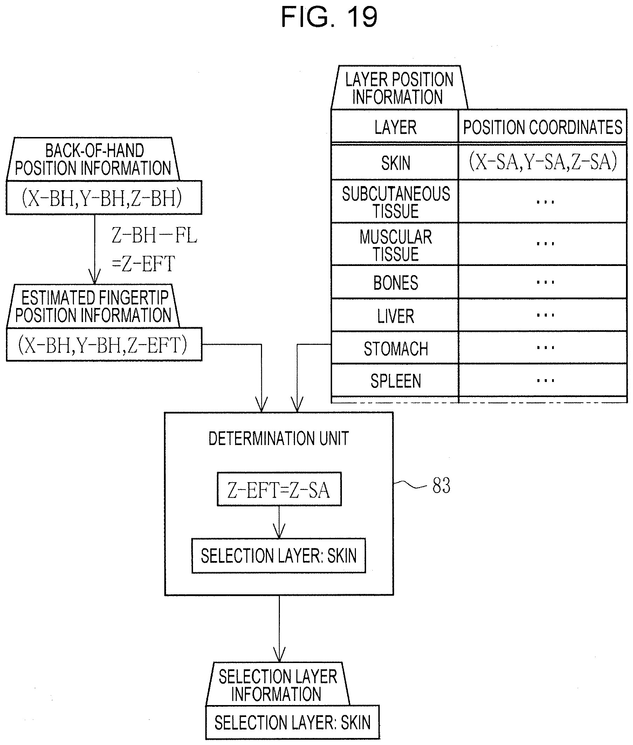

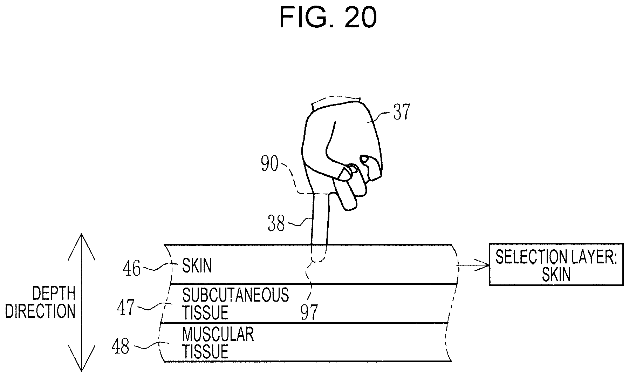

In the first embodiment described above, a layer that is located at a position that matches the position of the back 90 in the depth direction is determined to be the selection layer. In this case, the finger 38 is embedded in the layers and is not visible, as illustrated in, for example, Fig. 9 and Fig. 11. Therefore, although the user 14 may intend to select a layer on a side further than the selection layer, a layer on a nearer side is determined to be the selection layer, which may, depending on the user 14, feel uneasy to the user 14. Accordingly, in a second embodiment illustrated in Fig. 19 and Fig. 20, the user 14 is made to feel that a layer with which the tip of the finger 38 comes into contact is selected to thereby eliminate the possibility that the user 14 has an uneasy feeling.

Specifically, as illustrated in Fig. 19, the first detection unit 80 adds or subtracts the length FL of the finger 38 to or from the Z coordinate (Z-BH) in the back-of-hand position information to thereby calculate the Z coordinate (Z-EFT) of the tip of the finger 38. That is, with reference to the position of the back 90, a layer that is located at a predetermined distance from the back 90 in the fingertip direction is selected. It is determined whether to add or subtract the length FL of the finger 38 to or from the Z coordinate (Z-BH) in the back-of-hand position information in accordance with the position of the origin. As the length FL of the finger 38, for example, the average for adult men is registered. The first detection unit 80 outputs, to the determination unit 83, estimated fingertip position information that includes the calculated value Z-EFT as the Z coordinate (the XY coordinates are the same as in the back-of-hand position information) instead of the back-of-hand position information.

The determination unit 83 determines the selection layer on the basis of the estimated fingertip position information from the first detection unit 80 and the layer position information from the 3D image editing unit 85. The determination unit 83 determines a layer that is located at a position that matches, in the depth direction, the position of the tip of the finger 38 estimated from the back 90 to be the selection layer. Fig. 19 illustrates a case where the skin 46 is determined to be the selection layer because the Z coordinate (Z-EFT) in the estimated fingertip position information from the first detection unit 80 matches the Z coordinate (Z-SA) of the skin 46 in the layer position information from the 3D image editing unit 85 (Z-EFT is within the range of the skin 46 indicated by Z-SA).

In this case, unlike the first embodiment described above in which a layer that is located at a position that matches the position of the back 90 in the depth direction is determined to be the selection layer, the skin 46 that is located at a position that matches, in the depth direction, the position of the tip 97 of the finger 38 estimated from the back 90 is determined to be the selection layer by the determination unit 83, as illustrated in Fig. 20. Accordingly, from the viewpoint of the user 14, a layer with which the tip 97 of the finger 38 comes into contact is determined to be the selection layer, and therefore, there is no possibility that the user 14 has an uneasy feeling. Determination is performed with reference to the back 90. Therefore, as in the first embodiment, there is no possibility that an instruction given for the selection layer is erroneously recognized as selection of the selection layer.

The length FL of the finger 38 is not limited to a constant, such as the average for adult men. The length FL of the finger 38 may be calculated by using a mathematical expression in which the size, orientation, and so on of the hand 37 in the captured image are variables. Not only the Z coordinate (Z-EFT) of the tip 97 of the finger 38 but also the XY coordinates may be similarly estimated.

### Third Embodiment

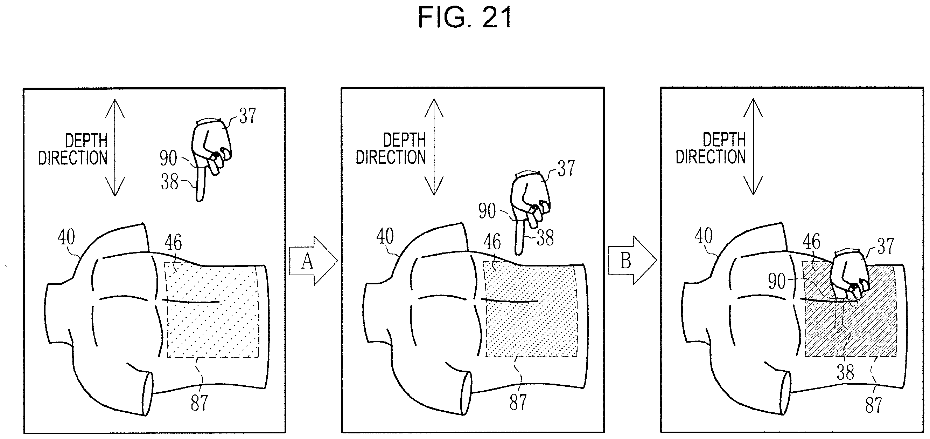

In a third embodiment illustrated in Fig. 21, the user 14 can easily determine the approximate distance between the hand 37 and the 3D image 40. Specifically, the color of a layer is changed in accordance with the distance between the layer and the hand 37 in the depth direction.

The distance between a layer and the hand 37 in the depth direction is calculated by subtracting the Z coordinate of the upper surface of the layer in the layer position information from the Z coordinate (Z-BH) in the back-of-hand position information. This calculation of the distance is performed by the determination unit 83, and information about the calculated distance (hereinafter referred to as "distance information") is output to the display control unit 74. The display control unit 74 makes, for example, the color of the layer deeper as the distance decreases on the basis of the distance information from the determination unit 83.

Fig. 21 illustrates a state where the color of the skin 46 in the target area 87 is changed in accordance with the distance to the hand 37 in the depth direction. In the illustration on the left side of arrow A, the distance between the skin 46 and the hand 37 is longest when compared with the center illustration and the illustration on the right side of arrow B. Therefore, the skin 46 in the target area 87 is colored, for example, light orange as represented by rough hatching. In the center illustration in which the distance is shorter than the distance in the illustration on the left side of arrow A, the skin 46 in the target area 87 is colored orange deeper than the color in the illustration on the left side of arrow A. In the illustration on the right side of arrow B in which the position of the back 90 matches the position of the skin 46 in the depth direction and the skin 46 is determined to be the selection layer, the skin 46 in the target area 87 is colored orange further deeper than the color in the center illustration.

Accordingly, the color of a layer is changed in accordance with the distance between the layer and the hand 37 in the depth direction, and therefore, the user 14 can easily determine the approximate distance between the hand 37 and the 3D image 40. Consequently, user's convenience can be further improved.

Note that Fig. 21 illustrates the example in which the color of the skin 46 is changed in accordance with the distance to the hand 37 in the depth direction; however, the layer for which the color is changed in accordance with the distance to the hand 37 in the depth direction is not limited to the skin 46. For any layer, other than the skin 46, that is visually recognizable to the user 14 and that is the outermost layer, the color of the layer is changed in accordance with the distance between the layer and the hand 37 in the depth direction. For example, in a case of a state where the transmittance of the skin 46 and so on is 50%

(semitransparent) and the internal organs 50 can be seen through, the internal organs 50 are in a visually recognizable state. Therefore, the color of the internal organs 50 is changed in accordance with the distance to the hand 37 in the depth direction.

### Fourth Embodiment

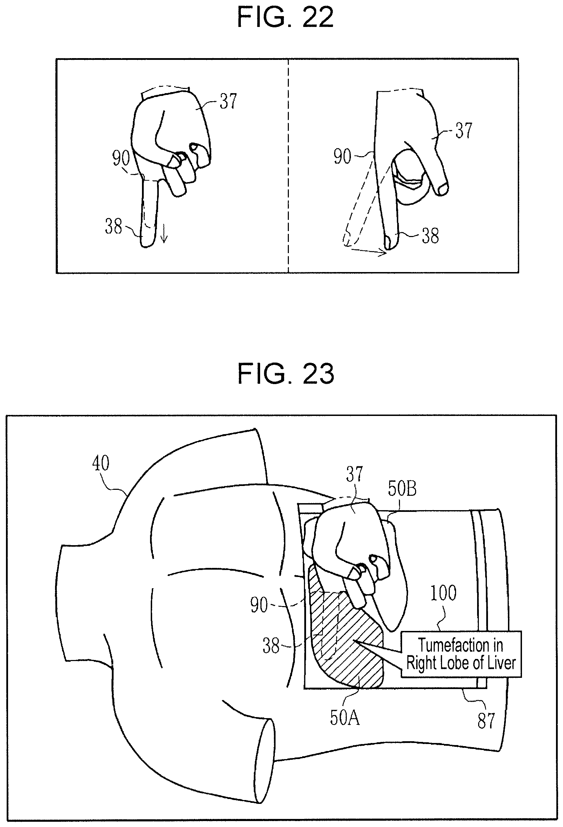

In the embodiments described above, the gesture in which the finger 38 is rotated is described as an example of the second gesture, and the instruction for changing the transmittance of the selection layer is described as an example of the instruction that is accepted by the accepting unit 84; however, the present invention is not limited to this configuration. In a fourth embodiment illustrated in Fig. 22 and Fig. 23, the second gesture is a tapping gesture with the finger 38, and the instruction that is accepted by the accepting unit 84 is an instruction for adding an annotation to the selection layer.

In Fig. 22, the tapping gesture with the finger 38, which is the second gesture in the fourth embodiment, is a gesture in which the finger 38 is bent toward the back 90 side at the back 90, which serves as a supporting point, and thereafter, is moved back to the original position. In the tapping gesture with the finger 38, the position of the back 90 remains unchanged similarly to the gesture in which the finger 38 is rotated in the embodiments described above. Therefore, as in the embodiments described above, there is no possibility that an instruction given for the selection layer is erroneously recognized as selection of the selection layer.

In a case of detecting the tapping gesture with the finger 38, the second detection unit 81 outputs, to the accepting unit 84, instruction information for adding an annotation to the selection layer. The accepting unit 84 outputs, to the display control unit 74, the instruction information for adding an annotation to the selection layer. The display control unit 74 causes an annotation 100 indicating a note (here, "tumefaction in right lobe of liver") to be displayed for the selection layer (here, the liver 50A), as illustrated in Fig. 23. Note that the annotation is input by, for example, recording speech of the user 14 via a microphone mounted on the HMD 11 and recognizing and converting the recorded speech to text.

Accordingly, any gesture other than the gesture in which the finger 38 is rotated may be used as the second gesture as long as the position of the back 90, which serves as a reference for determination of the selection layer, remains unchanged in the gesture. Fig. 22 illustrates the example of a single-tapping gesture with the finger 38; however, a double-tapping gesture in which the finger 38 is successively moved twice may be used as the second gesture. The instruction that is accepted by the accepting unit 84 is not limited to the instruction for changing the transmittance of the selection layer or the instruction for adding an annotation to the selection layer, and may be, for example, an instruction for measuring the distance between two points on the selection layer.

Further, the transmittances of layers other than the selection layer may be changed instead of the transmittance of the selection layer. For example, in a case where the selection layer is the liver 50A, the transmittances of layers other than the liver 50A, namely, the skin 46, the subcutaneous tissue 47, the muscular tissue 48, the bones 49, and the other internal organs 50, are changed at once. Accordingly, in a case where the user 14 wants to visually recognize only the selection layer, the transmittances of the other layers can be changed to 100% at once, which is preferable. A configuration may be employed in which the user 14 can switch between changing of the transmittance of the selection layer and changing of the transmittances of layers other than the selection layer.

The back-of-hand position information may be detected on the basis of a positional relationship between the 3D image 40 and the back 90 of the hand 37 in a combined image obtained by combining the captured image from the camera 29 and the 3D image 40.

The form of the target area 87 is not limited to a quadrangular prism as in the embodiments described above. For example, the form of the target area 87 may be a right circular cylinder or an elliptic cylinder in which one surface corresponds to a circle or an ellipse centered on the back 90.

The HMD 11 is not limited to the type in which the protective frame 27 in a goggle form entirely covers the both eyes of the user 14 and the band part 26 is fixed to the head of the user 14 as in the embodiments described above. An eyeglass-type HMD having temples that fit around the ears of the user 14, nose pads that rest below the inner corners of the eyes, a rim for holding the screen, and so on may be used.

The camera 29 need not be mounted on the HMD 11. The camera 29 may be placed at any position as long as at least an image of the hand 37 of the user 14 can be captured. Therefore, the camera 29 need not capture an image of the field of view that is the same as the augmented reality space ARS recognized by the user 14 through the HMD 11. For example, the camera 29 may be placed at any position in the operating room 35 at which the camera 29 can capture an image of the back 90 of the hand 37 of the user 14 who is authorized to perform processes.

The number of users 14 is three in the embodiments described above; however, the number of users 14 may be one, two, or three or more.

In the embodiments described above, the technique is used in which a position at which a virtual object appears is defined by using the marker 39; however, a technique may be employed in which a virtual object is made to appear on a set specific actual object without using the marker 39. In this case, the specific actual object present in a captured image is recognized by using an image recognition technique, the recognized specific actual object is assumed to be the marker 39, and a virtual object is displayed on the specific actual object.

In the embodiments described above, the functions of the control apparatus for the HMD 11 are fulfilled by a desktop personal computer; however, the present invention is not limited to this. The image accumulation server 19 may fulfill all or some of the functions of the control apparatus for the HMD 11. For example, the function of the 3D image editing unit 85 is fulfilled by the image accumulation server 19. In this case, a 3D image may be distributed to the HMD 11 from the image accumulation server 19 through streaming.

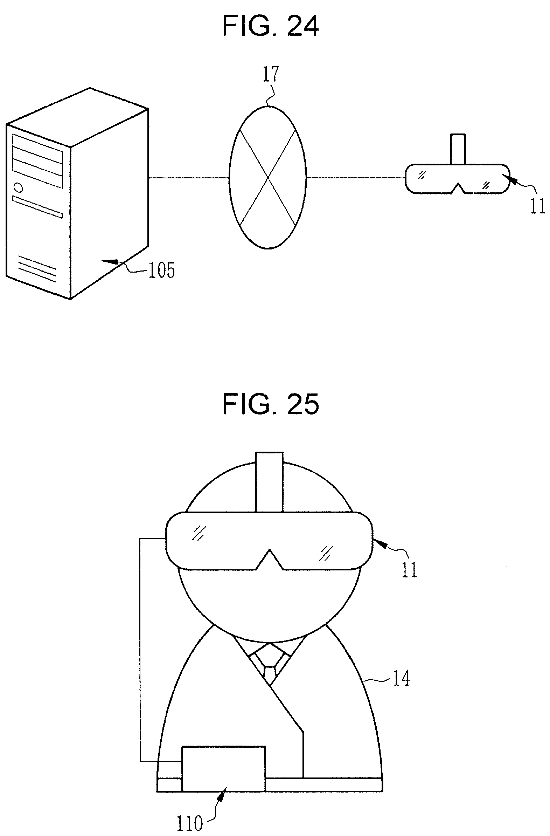

Alternatively, a network server 105 different from the image accumulation server 19 may fulfill the functions of the control apparatus for the HMD 11, as illustrated in Fig. 24. Further, a local server placed in the medical facility 13 may fulfill the functions of the control apparatus for the HMD 11. The image accumulation server 19 may be placed in the medical facility 13 as a local server.

Alternatively, a portable computer 110 that the user 14 can wear on, for example, the waist and carry may fulfill the functions of the control apparatus for the HMD 11, as illustrated in Fig. 25. In this case, the computer that fulfills the functions of the control apparatus for the HMD 11 may be a dedicated product specific to the image display system 10 instead of a commercially available personal computer, such as the control apparatus 12. The functions of the control apparatus may be included in the HMD 11 itself. In this case, the HMD 11 itself functions as the control apparatus.

As described above, various modifications can be made to the hardware configuration of the computer that constitutes the control apparatus for the HMD 11 according to the present invention. The control apparatus for the HMD 11 can be constituted by a plurality of computers that are separated hardware units for the purpose of improving processing capacity and reliability. For example, the functions of the captured-image obtaining unit 70 and the detection unit 72 and the functions of the 3D image obtaining unit 71, the processing unit 73, and the display control unit 74 may be distributed to and fulfilled by two respective computers. In this case, the two computers constitute the control apparatus for the HMD 11.

As described above, the hardware configuration of the computer can be changed as appropriate in accordance with requested performance, such as processing capacity, safety, reliability, and so on. Further, in addition to the hardware, an AP, such as the operation program 65, can be duplicated or can be distributed to and stored in a plurality of storage devices for the purpose of attaining safety and reliability.

The 3D image 40 is not limited to the image of the upper half of the target patient lying on their back. The 3D image 40 may be an image of the whole body of the target patient lying on their back or may be an image of another part, such as the head. The layers may include, for example, the blood vessel tissue and the nervous tissue instead of or in addition to the skin 46, the subcutaneous tissue 47, and so on described in the embodiments described above.

In the embodiments described above, the image display system 10 is applied to the preoperative conference that is held in the medical facility 13, and the 3D image 40 is assumed to be the virtual object, for example. However, application of the image display system 10 to the preoperative conference is not restrictive, and the virtual object is not limited to the 3D image 40 accordingly. For example, the image display system 10 may be applied to gaming and, for example, a game character may be displayed as the virtual object.

In the embodiments described above, for example, the processing units that perform various types of processing, namely, the captured-image obtaining unit 70, the 3D image obtaining unit 71, the detection unit 72 (the first detection unit 80, the second detection unit 81, and the third detection unit 82), the processing unit 73 (the determination unit 83, the accepting unit 84, and the 3D image editing unit 85), and the display control unit 74, are implemented as various processors as described below in terms of hardware structure.

The various processors include a CPU, a programmable logic device (PLD), a dedicated electric circuit, and so on. As is well known, a CPU is a general-purpose processor that executes software (program) to function as the processing units. A PLD is a processor, such as an FPGA (field-programmable gate array), for which the circuit configuration can be changed after manufacturing. A dedicated electric circuit is a processor, such as an ASIC (application-specific integrated circuit), having a circuit configuration specifically designed to perform a specific process.

One processing unit may be constituted by one of the various processors or a combination of two or more processors of the same type or different types (for example, a combination of a plurality of FPGAs or a combination of a CPU and an FPGA). Further, a plurality of processing units may be constituted by one processor. A first example configuration in which a plurality of processing units are constituted by one processor is a form in which one or more CPUs and software are combined to constitute one processor, and the processor functions as the plurality of processing units. A second example configuration is a form in which a processor that implements the functions of the entire system including the plurality of processing units with one IC chip is used, a representative example of the form being a form of using a system on a chip (SoC). As described above, in terms of hardware structure, the processing units are constituted by one or more of the processors described above.

Further, more specifically, in terms of hardware structure, these processors are implemented as electric circuitry obtained by combining circuit devices, such as semiconductor devices.

On the basis of the above description, an image display system described in additional item 1 below can be determined.

### Additional Item 1

An image display system including: a head-mounted display that is worn on a head of a user; and a control apparatus for the head-mounted display to allow the user to recognize, through the head-mounted display, an augmented reality space obtained by merging a real space with a virtual space, including:
a display control processor that causes a three-dimensional virtual object in which a plurality of layers are stacked in a depth direction to be displayed on the head-mounted display;
a first detection processor that detects a first gesture in which a hand of the user is moved in the depth direction;
a second detection processor that detects a second gesture using a finger of the hand;
a determination processor that performs, on the basis of the first gesture, determination of a selection layer that is selected by the user from among the plurality of layers, the determination being performed with reference to a position of a back of the hand; and
an accepting processor that accepts an instruction for the selection layer, the instruction corresponding to the second gesture.

In the present invention, any of the above-described embodiments and modifications can be combined as appropriate. For example, the first embodiment and the fourth embodiment may be combined and implemented, or the second embodiment and the third embodiment may be combined and implemented. The present invention is not limited to the above-described embodiments, and various configurations can be employed without departing from the spirit of the present invention, as a matter of course. Further, the present invention covers not only the program but also a recording medium storing the program.

### Reference Signs List

10 image display system
11, 11A to 11C head-mounted display (HMD)
12 control apparatus
13 medical facility
14, 14A to 14C user
15 display
16 input device
17 network
18 data center
19 image accumulation server
25 main body part
26 band part
27 protective frame
28 screen
29 camera
30 cable
31 horizontal band
32 vertical band
35 operating room
36 operation table
37, 37A, 37B, 37C hand
38, 38A finger
39 marker
40 three-dimensional volume rendering image (3D image)
45 CT scan image
46 skin
47 subcutaneous tissue
48 muscular tissue
49 bones
50 internal organs
50A liver
50B stomach
50C spleen
55 storage device
56 memory
57 CPU
58 communication unit
59 data bus
65 operation program
66 first correspondence information
67 second correspondence information
68 third correspondence information
70 captured-image obtaining unit
71 3D image obtaining unit
72 detection unit
73 processing unit
74 display control unit
80 first detection unit
81 second detection unit
82 third detection unit
83 determination unit
84 accepting unit
85 3D image editing unit
87 target area
90 back
95, 100 annotation
97 fingertip
105 network server (control apparatus)
110 portable computer (control apparatus)
ARS, ARS-A to ARS-C augmented reality space
RS, RS-A real space
VS, VS-A virtual space
S10 to S14, S100 to S150 step

## Claims

1. An image display system comprising: a head-mounted display that is worn on a head of a user; and a control apparatus for the head-mounted display to allow the user to recognize, through the head-mounted display, an augmented reality space obtained by merging a real space with a virtual space, comprising:
a display control unit that causes a three-dimensional virtual object in which a plurality of layers are stacked in a depth direction to be displayed on the head-mounted display;
a first detection unit that detects a first gesture in which a hand of the user is moved in the depth direction;
a second detection unit that detects a second gesture using a finger of the hand;
a determination unit that performs, on the basis of the first gesture, determination of a selection layer that is selected by the user from among the plurality of layers, the determination being performed with reference to a position of a back of the hand; and
an accepting unit that accepts an instruction for the selection layer, the instruction corresponding to the second gesture.

2. The image display system according to claim 1, wherein the determination unit determines a layer, among the plurality of layers, that is located at a position that matches the position of the back of the hand in the depth direction to be the selection layer.

3. The image display system according to claim 1, wherein the determination unit determines a layer, among the plurality of layers, that is located at a position that matches a position of a tip of the finger in the depth direction to be the selection layer, the position of the tip of the finger being estimated from the back of the hand.

4. The image display system according to any one of claims 1 to 3, wherein the display control unit makes a display mode of a layer among the plurality of layers differ in a case where the layer is the selection layer and in a case where the layer is not the selection layer.

5. The image display system according to any one of claims 1 to 4, wherein the display control unit causes an annotation indicating a name of the selection layer to be displayed.

6. The image display system according to any one of claims 1 to 5, wherein the display control unit changes a color of a layer among the plurality of layers in accordance with a distance between the layer and the hand in the depth direction.

7. The image display system according to any one of claims 1 to 6, wherein the second gesture is a gesture in which the finger is rotated or the finger is tapped.

8. The image display system according to any one of claims 1 to 7, wherein the accepting unit accepts, as the instruction, an instruction for changing a transmittance of the selection layer.

9. The image display system according to any one of claims 1 to 8, wherein a display position of the virtual object in the real space is fixed.

10. The image display system according to any one of claims 1 to 9, wherein the virtual object is a three-dimensional volume rendering image of a human body.

11. A control apparatus for a head-mounted display that is worn on a head of a user to allow the user to recognize an augmented reality space obtained by merging a real space with a virtual space, comprising:
a display control unit that causes a three-dimensional virtual object in which a plurality of layers are stacked in a depth direction to be displayed on the head-mounted display;
a first detection unit that detects a first gesture in which a hand of the user is moved in the depth direction;
a second detection unit that detects a second gesture using a finger of the hand;
a determination unit that performs, on the basis of the first gesture, determination of a selection layer that is selected by the user from among the plurality of layers, the determination being performed with reference to a position of a back of the hand; and
an accepting unit that accepts an instruction for the selection layer, the instruction corresponding to the second gesture.

12. An operation method for a control apparatus for a head-mounted display that is worn on a head of a user to allow the user to recognize an augmented reality space obtained by merging a real space with a virtual space, comprising:
a display control step of causing a three-dimensional virtual object in which a plurality of layers are stacked in a depth direction to be displayed on the head-mounted display;
a first detection step of detecting a first gesture in which a hand of the user is moved in the depth direction;
a second detection step of detecting a second gesture using a finger of the hand;
a determination step of performing, on the basis of the first gesture, determination of a selection layer that is selected by the user from among the plurality of layers, the determination being performed with reference to a position of a back of the hand; and
an accepting step of accepting an instruction for the selection layer, the instruction corresponding to the second gesture.

13. An operation program for a control apparatus for a head-mounted display that is worn on a head of a user to allow the user to recognize an augmented reality space obtained by merging a real space with a virtual space, the operation program causing a computer to execute a function comprising:
a display control function of causing a three-dimensional virtual object in which a plurality of layers are stacked in a depth direction to be displayed on the head-mounted display;
a first detection function of detecting a first gesture in which a hand of the user is moved in the depth direction;
a second detection function of detecting a second gesture using a finger of the hand;
a determination function of performing, on the basis of the first gesture, determination of a selection layer that is selected by the user from among the plurality of layers, the determination being performed with reference to a position of a back of the hand; and
an accepting function of accepting an instruction for the selection layer, the instruction corresponding to the second gesture.
